# EUROPEAN PATENT APPLICATION

(11) **EP 1 672 406 A1**
(43) Date of publication of application: **21.06.2006**
(21) Application number: 03818734.0
(22) Date of filing: 23.09.2003
(51) Int. Cl.: G02B 27/22, H04N 13/00

(54) **3D IMAGE PROJECTION SYSTEM**

(71) Applicant: Barjau Delgado, Everest, C.P. 01900, México, D.F. (MX)
(72) Inventor: Barjau Delgado, Everest, C.P. 01900, México, D.F. (MX)
(74) Representative: Gervasi, Gemma
(86) International application number: PCT/MX2003/000077
(87) International publication number: WO 2005/029154

(57) **Abstract**

The invention hereby presented relates to the electronic systems manufacturing industry for handling and projecting images for communication purposes. More specifically, it refers to a system that combines electronic and physics aspects to achieve the function of projecting 3-D images that can be viewed in daylight, with an immersion effect, suspended in the air, as real volumes in third dimension and without a visual aid.
The advantage of the present invention related to the background art resides in the fact that a projected image is appreciated as a three-dimensional image, suspended in the air, in a daylight atmosphere or in interiors with indirect illumination, without requiring a dark atmosphere, achieving dynamic images (with movement and modification of its aspect, forms, color, texture, size and any other visual appearance) and sound. The System gives the opportunity to modify images along time, according to the sequences programmed by an operation and projection schedule and a 3-D video-library. The System is built by an optical subsystem that generates the image in space, software and some electronic components that generate images in two dimensions as well as other electronic and software elements to administrate, control, supervise and operate the system itself, locally or remotely from a central unit and through a telecommunications solution.

## Description

### TECHNICAL FIELD

The invention hereby presented relates to the electronic systems manufacturing industry for handling and projecting images for communication purposes. More specifically, it refers to a system that combines electronic and physics aspects to achieve the function of projecting 3-D images that can be viewed in daylight, with an immersion effect, suspended in the air, as real volumes in third dimension and without a visual aid.

### BACKGROUND ART

Different technological solutions exist that reproduce 3-D images, projecting the real volume of an object in three dimensions floating in the air. Most of these technologies are developed to appreciate different perspectives of the projected object with the same image projection. Therefore, if a person walks around the projected image, he can observe the projected object from different perspectives. These systems may or may not require a visual aid and mainly geared toward medical, engineering or scientific applications.

Some of these technologies use a physical object from which the projected image is reproduced with a virtual effect, floating in the air. There is little or no margin to modify the images during the projection. This technology is mostly applied as a promotional marketing solution (display of only one projected object for a relatively short period of time -weeks-). Other technologies project 3-D digital images based on real 3-D (spatial) computer processes, producing at least 100 images simultaneously to be able to observe different perspectives of the same object from different angles in a particular period of time. These solutions are mainly oriented to industrial or scientific applications.

Recently, new technologies have appeared that project 2D based images over a fog or vapor flat screens, but they have poor quality, short angle of view and are projected in a dark environment. The images do not appear to be floating in the space in front of the screen.

Each of these other technologies has at least one of the following limitations: 1) the technology does not offer different image reproduction sizes; 2) images can only be appreciated within a short angle of view and/or distance; 3) no remote system operation through a telecommunications solution is possible (only able to operate locally); 4) solutions are oriented only to the visual aspects, without a synchronized audio media; 5) technologies without visual aid requirements must be located in dark environments to be properly viewed; 6) visual communication is exclusively based in 3-D images, without including other visual supports; 7) advertising, educational and other applications are developed to continuously repeat only one message, for promotional purposes or very specific message communication goals; 8) applications and solutions are restricted to replaying 3-D images without including services other than that of communication.

Technology and solutions belong to companies like Dimensional Media Associates, Inc., Optical Products Development, Visual Communication Systems (Visucom), 102 Technology and Fog Screen, among others. These solutions can be consulted through their web pages. In the case of Dimensional Media Associates (www.3dmedia.com), they present different models like the M-18a, M-23a, M-35a, M-40SV/DV, M-360a and Vizta 3D. Optical Products Development (www.opd3d.com) has different solutions based in the VolumetriX tm brand, like VX-35, VX-24, VX-50 and VX-360 models. The applications offered by this company are training, presentations, videoconferences, exhibitions, 3D CAD design, catalogs or promotional stands. Also, the same company has developed interactive systems that operate with an optic reader when someone walks in a specific area.

Philips (www.research.philips.com), among other companies, shows a computer monitor that reproduces 3-D images.

Visucom (www.visucom.de) exhibits different solutions denominated motion box 33, motion pro 23, motion pro 40, motion pro 44, media motion 44 and motion light 200, with different forms, sizes and designs in which 3-D images are static (at most, they rotate), because their technological principle is the virtual reproduction of a physical object that is placed inside a reflection camera. There also exist such documents as "Four autostereoscopic monitors on the level of industrial prototypes" whose author is Reinhard Börner. In this case, applications are designed for scientific and industrial applications. It was planned to be marketed as a monitor, starting from 1999, using the principles of lenticular structures.

In the document "New autostereoscopic display system" of D. Ezra, G. J. Woodgate, B. A. Ornar, N. S. Holliman, J. Harrold and L. S. Shapiro, from Sharp Laboratories in Europe, an autostereoscopic display system is based on a conventional LCD screen to obtain shinier and clearer colors of 3-D images.

As may be appreciated, the list of 3-D image projectors is quite wide. However, to date, no system exists that is able to solve, in one application, most of the limitations listed above and is able to: 1) carry out advertising campaigns from different companies and different products in one physical system including synchronic sound; 2) store and schedule the reproduction of many 3-D messages; 3) easily manipulate the contents continuously, mainly remotely but also locally (because of huge data processing and telecommunication requirements); 4) reproduce large 3-D images or offer solutions in different sizes that can be observed from different angles and distances in daylight environments and without a visual aid; and 5) integrate to the system different services like queue ticket expenditure, among many others.

### OBJECTS OF THE INVENTION

An object of the present invention is to achieve a projection system whereby objects appear to be suspended in the air in an atmosphere of indirect illumination in daylight and without the need of a dark atmosphere or visual aids, achieving dynamic images (with movement and changes in aspect, form, color, texture, size or any other appearance characteristics) with sound. At the same time, it gives the opportunity to display new images continuously, according to sequences programmed by a projection schedule and a 3-D video library.

Other objects include (1) allowing observers to look at the images from different distances and angles, even when their heights might be different; (2) store a 3-D video library of messages locally; (3) administrate, operate, supervise and control the 3D System locally by an operator or remotely from a central unit through a telecommunications solution; (4) include other services that may be of interest to observers in the 3D system.

Another object of this invention is to achieve projections of these 3-D volumetric images in different sizes (from a few centimeters to several meters), replaying different animations with variable duration, and enable interactive functions between the message and the observer (the execution of the message depends on the decisions of the observer and the options presented to him/her in a menu).

And all other qualities and objects that may not have been described above and will become apparent in the description of the aforementioned invention and the accompanying drawings presented below.

We denominated this system as "3D Multifunctional System".

### BRIEF DESCRIPTION OF THE INVENTION

An initial activity necessary for the development of this invention was to achieve the visual immersion effect for a 3-D image to be observed at different distances and different angles, with different fields of vision according to different people's heights. In this way, the optical geometry of the 3D Multifunctional System solution establishes different angles and distances among the optical elements that project and reflect the images. This is one of the main variables involved in the definition and design of the 3D Multifunctional System.

Different problems related to the logical architecture of the required elements to generate the image and create the 3D Multifunctional System were solved, including the integration of mirrors, projection screens, lenses and other elements that project or generate a luminous image with different digital image processing technologies such as computer screens, TV sets, videos, computers, slide projectors and other similar technologies, These variables and elements were adjusted to enhance and integrate the 3D Multifunctional System (angles, distances, image colors, animation effects and distribution of electronic and optical elements).

Tests were made with different optical elements, software and hardware, in-house and commercial, to obtain a system that could operate according to an operation schedule, programmed locally by an operator or at a distance from a central unit through a telecommunications solution. This application sought to administrate a local 3-D video library and the operation schedule, as well as all the administrative, operative, control and supervision functions in order for the system to operate autonomously according to the rules dictated locally by the operator or at a distance by the central unit. Any telecommunications technology and architecture -dial up, optical fiber, satellite, internet, ATM, etc.- may be used with the 3D Multifunctional System to achieve the communication goals between the central unit and the System.

The integration of other elements was also analyzed, including proximity sensors to allow interaction between the System and an observer, or the addition of a synchronized background 2-D screen, behind the 3-D image projection, that improves the total visual effect of the projected messages, Audio, video and photo recorders and/or transmitters were adapted to provide feedback to the central unit regarding the environment status and/or interaction in real time with an observer.

The behavior of observers was analyzed in different environments to identify the reasons behind their motivation to watch the message projected by the 3D Multifunctional System. This analysis identified that the 3D Multifunctional System, depending on the environment and location, should/could integrate additional functions such as payment reception, queue ticket dispenser, printed advertising distribution, PDA information downloading or optical codes scanning, among many other services. The System integrates the following modules:
a. The optical system that reproduces 3-D images with a visual effect of immersion and appearing to be suspended in the air in real volume, based in a two-dimensional image projection.
b. Optical geometric variations to enhance and achieve different visual effects or requirements.
c. Electronic or optical components and software to display two-dimensional images.
d. Other functional elements to enhance the global optical effect of the 3-D image projected.
e. Electronic elements and software to administrate, control, supervise and operate the 3D Multifunctional System from a central unit through a telecommunications solution.
f. Elements to administrate, control, supervise and operate the 3D Multifunctional System locally.
g. Applications of the 3D Multifunctional System as an advertising aid with "multi-functional" options.
h. 3D Multifunctional case containing all the parts and elements that conform the 3D Multifunctional System technology and multi-functional components.

This solution uses an optical principle whereby the same image perspective is always observed from each and every angle of view. This technology requires much less information than existing background art, so new remote operation and administration control is possible through telecommunication solutions. Different image perspectives can be obtained through interactive devices controlled by the observer. Our technological solution differs from the background art because we can integrate, achieve, enhance or introduce new concepts in each system, such as:
1. Projection of more than one dynamic 3-D message in a period of time, where the message consists of the integration of different 3-D images and audio. A 3-D image is any 3-D real or fictitious character, object, text or any other visual icon, projected together or separately, statically or in any possible movement and being transformed visually (color, form, size, texture or any other visual characterization).
2. The projection of messages is controlled through a 3-D video library and an operational schedule, so new messages may be loaded for projection continuously.
3. Images and System administration, control, supervision and operation can be done remotely (through a telecommunications solution) or in situ.
4. Images can be appreciated at a wide angle of view and distance without requiring visual aids in daylight; Different image perspectives can be obtained through interactive devices controlled by the observer.
5. Images may be displayed in different sizes, from a few centimeters to several meters, according to each application requirement.
6. Interaction between the message and the observer is possible through different devices, such as proximity sensors, optical readers (infrared, barcodes, etc.), keyboard or mouse, among other similar devices. The execution of the message depends on the decisions made by the observer and the options provided in the message.
7. Secondary visual systems, like two-dimensional video or computer screens, among many others, projecting images coordinated with the 3-D message, enhancing the overall visual communication goals.
8. Multi-functional applications are developed and/or integrated, such as optical scan readers, PDA communications or ticket vending machines, among many others, to enhance the observer relation with the environment where the system is located, as will be described below.
9. It is now possible for different companies or brands to share the same 3-D system for new marketing and advertising applications.
10. New solutions for different applications (advertising, education, industrial or scientific, among many others) are possible because of the remote interaction with an observer through specific elements, such as telecommunications solutions and audio, cameras and proximity sensors, among other similar elements.
11. It is possible to broadcasting images in real time from a central unit to a specific network of 3D Multifunctional Systems.

Different drawings are included below to better understand the 3D Multifunctional System concepts. These drawings are provided for illustration purposes only and do not constitute an exhaustive list.

### BRIEF DESCRIPTION OF DRAWINGS

Fig. 1 illustrates the general configuration of the 3D Multifunctional System.
Fig. 2 illustrates the three-dimension optical subsystem of this invention with a stereoscopic screen.
Fig. 3 illustrates a variation example of the three-dimension optical geometry where the image is projected to the stereoscopic screen through a mirror.
Fig. 4 illustrates another variation example of the three-dimension optical geometry where the source of the image is a LCD projector. For a better understanding of the invention, following is a detailed description of the System shown in the drawings.

### DETAILED DESCRIPTION OF THE INVENTION

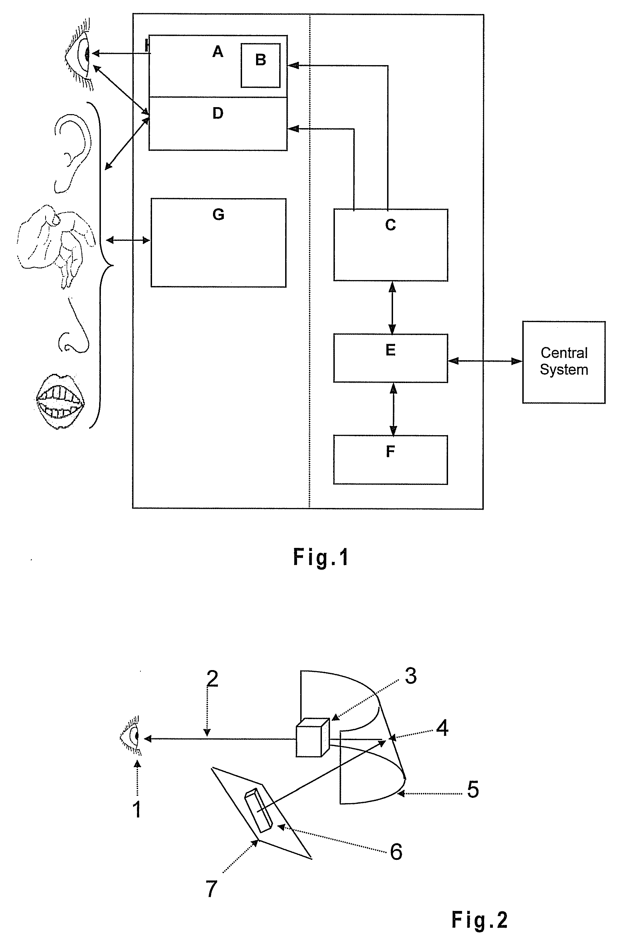

All details of this novel system shall be clarified with the following detailed description and the drawings attached. As can be appreciated in Fig. 1 -which shows in schematic form the general configuration of the System- the System consists of the following elements, structured to achieve the required function. In first place, there is a **3-D Optical Subsystem *A*** to reproduce 3-D images with an immersion effect, where objects appear to be suspended in the air. Optionally, **Optical Geometric Variations *B*** can be added. The 3-D Optical Subsystem ***A*** and the Optical Geometric Variations ***B*** receive the image from the **Electronic and Software Elements *C*** that project two-dimensional images. These Electronic and Software Elements ***C*** also control other **Functional Elements *D*** that enhances the overall 3-D optical effect and communication goals. The central unit has an effect on the Electronic and Software Elements ***C*** components through the **Electronic and Software Elements *E*** that allow to administrate, control, supervise and operate the 3D Multifunctional System from a central unit and through a telecommunications solution.

The 3D Multifunctional System can also be administrated, controlled, supervised and operated locally through the **Electronic and Software Elements *F***.

As illustrated in Fig. 1, different **Applications *G*** added to the 3D Multifunctional System and called "multi-functionalities" have been identified and/or designed.

All these elements, ***A*** to ***G***, are contained in **Specific Application Casings** designated as ***H***.

Among the main functions that the 3D Multifunctional System is able to carry out are:
a. To determine the time when the 3D Multifunctional System should turn on and off and any other operation contemplated in the operation schedule.
b. To record, process or communicate to the central unit any control signals, operation alarms and other equivalent functions to guarantee correct operation.
c. To record and communicate to the central unit -through a camera that registers and/or transmits an audio -video signal in the form of pictures or continuous video- the physical state of the 3D Multifunctional System, the environment where the 3D Multifunctional System is located or to carry out interactive functions with an observer, among others.
d. To load from the central unit, or in situ by an operator, the 3D video-library messages and the projection and operation schedules that will execute the 3D Multifunctional System during a period of time.
e. To receive and project on-line 3-D messages from the central unit, interactive or not, so they are projected in real time without the need to be stored in the 3D video-library.
f. To operate autonomously according to the operation and projection schedules and 3-D video-library, based on the previous characteristics.
g. To operate any multi-functional services integrated in the system.
h. Any other equivalent operation.

All these functions are administrated, controlled, supervised and operated from the central unit, or locally by an operator, with the electronic and software elements that the System contains. Regarding to the 3-D optical subsystem, Fig. 2 schematically shows the elements involved. The observer **(1),** through a line of view **(2),** perceives the 3-D virtual image **(3).** This virtual image **(3)** is the optical effect **(4)** created by the stereoscopic screen **(5).** The original two-dimensional image **(6)** is projected from projection screen **(7).**

The stereoscopic screen has material properties and also a certain angle, form and inclination to achieve the effect of perceiving 3-D images floating in the air without visual aids. The virtual image that the observer perceives is located at the front of the stereoscopic screen, in the line of view. The stereoscopic screen is transparent and has a conical shape.

The angles, inclinations, conical forms and positions of the stereoscopic screen determine the optical line of view, as well as the height and field of view where the image is projected and able to be observed by people in different positions and of various heights. The 3-D image size depends on the 3-D optical element dimensions.

Depending on the required optical variations, the projection screen may be flat or have different optical forms or be combined with convex or concave lenses or any other optical elements.

The projection screen can be constituted by any of many and different luminous sources. Without constituting an exhaustive list, and regardless of their technological principle, brand or technical characteristics, the different luminous sources of images that can constitute the projection screen are:
1. Systems that project the two-dimensional image by themselves: TV set, computer screen or any other system that projects static or dynamic images in two dimensions and can be observed with the naked eye.
2. Systems that project two-dimensional images that are reflected on a screen (usually white): Reflecting screen (for LCD multimedia projectors, slides or movie film, among others, in any formal or any other equivalent system), "back-projection" screen, similar to the above one, but receiving the projection from the back of the observer position, or any other system of luminous source like those described before.

In summary, the elements of the described optical subsystem consist of: 1) a projection screen as the luminous source of a two-dimensional image and 2) a stereoscopic screen that reflects the projected image, which is perceived without visual aids as a real 3-D image floating in the air.

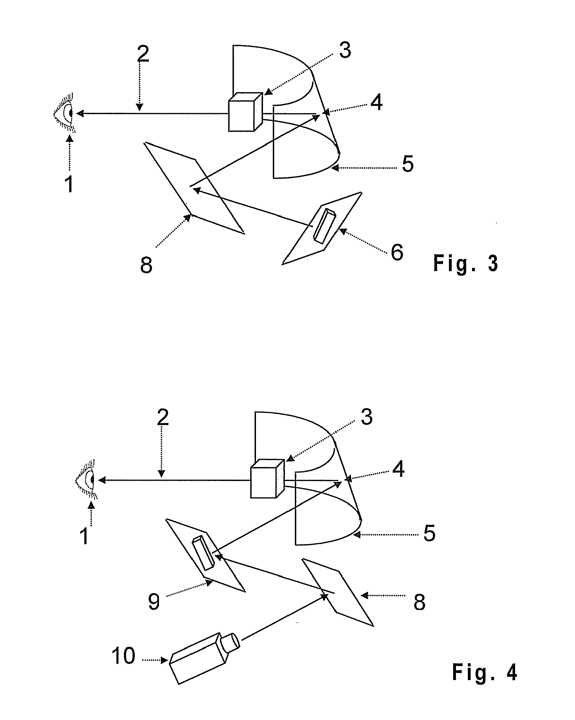

According to the application requirements, the basic arrangement of the optical subsystem can be modified -by adding mirrors, lenses or any other optical element- to generate a huge number of alternative geometries. For example, the geometry of fig. 3 illustrates an optical geometry variation where the image is projected to the stereoscopic screen through a mirror **(8);** the remaining elements are the same components of fig. 2 designs.

In fig. 4, the optical geometry involves a LCD multimedia projector **(10),** a white projection screen **(9)** and a mirror **(8).**

Related to the Electronic and Software Elements ***C*** that can reproduce two-dimensional images, a huge variety of solutions and technologies can be used. Examples of these are computers, slide or film projectors, TV or PC screen supported with some auxiliary devices, such as a VCR or DVD, among others.

In the computer solution case, the projected images may be generated by the computer itself, combined with certain software, or by replaying the messages recorded in some internal or external storage device (3D video-library).

Related to the Functional Elements ***D*** that enhance the total 3-D optical effect, the reproduction and projection of a 3-D message is also composed by and synchronized with additional elements such as:
1. Audio reproduction with speakers.
2. A second static or dynamic image/screen in back plane (synchronized by computer).
3. Presence sensors located in different parts of the 3D Multifunctional System to achieve functions of interactivity with the observer.
4. Video and/or photo cameras, with or without image recording and with or without camera movement control, where images are stored in (or showed by) the central unit or locally in the 3D Multifunctional System.
5. Microphone to record or transmit the local environment audio.
6. Any other secondary element required to support these technologies and objectives.

A computer controls the operation of all the elements listed above. The Electronic and Software Elements E that allow to administrate, control, supervise and operate the 3D Multifunctional System from a central unit and through a telecommunications solution are built into a computer (hardware and software) that includes the following elements:
1. Storage devices, specific message reproduction units (CD or DVD readers, etc.), connecting cables and electronic computer cards with other devices (videotape, LCD projectors, audio, cameras, back plane screen, sensors, energy systems, fan, extractor, ionizer and any other element required for the operation of the 3D Multifunctional System); all of this regardless of the brand, particular technical specifications and technological development.
2. External or internal image reproduction devices like CD, DVD, VCR, projectors, etc., and any external control card devices, among others.
3. The computer's Operating System.
4. All the commercial software elements for database and batch processes administration, remote computer control, message reproduction as well as audio, video and any other multimedia signal or functionality required in the 3D Multifunctional System.
5. The proprietary software denominated as "Jupiter" by means of which the computer operates autonomously by instruction of the central unit through the operation and projection schedules and the 3D video-library. In this way the 3D Multifunctional System is able to administrate, operate, control and supervise its own functionality and to report anomalies or upgrade the operational logic either from the central unit or locally by an operator.
6. All proprietary "drivers" (software), electronic devices and cables that we have developed to control specific elements such as LCD projectors, image processing, presence sensors, temperature sensors, fans, extractors, ionizers, energy supply control, etc.
7. The commercial telecommunications software and hardware for communication with the central unit, regardless of brand, technology, architecture and specific technical characteristics.

The Electronic and Software Elements ***E*** system described above interact with the Electronic and Software Elements ***F*** that allow to administrate, control, supervise and operate the 3D Multifunctional System in situ by an operator, modifying the 3D video-library and the operation and projection schedules. These facilities consist in:
1. The same computer included within the ***E*** subsystem, adding a keyboard, mouse, screen (it can use the primary or secondary screen), storage and/or reproduction devices, etc.
2. The computer's operating system.
3. A proprietary software by means of which the operator can interact with all the elements that the 3D Multifunctional System administrates, controls, supervises and operates through the operation and projection schedules, the 3D video-library and all other software and hardware elements of the system.

Additionally, and as a bonus of the system, the system can embed other ***G*** functions or applications denominated "multi-functionalities", such as:
a. A printed information dispenser (advertising, sales, educational, etc.) for various formats (cards, pamphlets, information sheets, newspapers, etc.), to communicate different messages.
b. A queue ticket dispenser system to organize orders where waiting lines are generated.
c. A public or private telephone, that allows the observer to make telephone calls.
d. A weighing system that allows the observer to weigh different objects.
e. An optic reading device, such as bar-code readers, that allows the observer to obtain specific product information (prices, characteristics, etc.).
f. A form dispenser with a table support and a pen, that allows the observer to fill out forms or applications.
g. Vending machines for various products.
h. Automated ticketing systems that allow the observer to purchase different services.
i. Automated paying systems for services such as parking or any other equivalent payment service.
j. A system to load or download Information with any kind of electronic or computer devices like, for example, handheld or PDA systems.
k. Any other equivalent solution that may be required in a public or private area where people tend to congregate in groups or individually, and are stimulated to use the functions built into the 3D Multifunctional Systems.

Additionally, the 3D Multifunctional System, including the Multi-Functionality Options ***G***, is contained in the Case Subsystem **H**, which also contains other functional elements like:
1. Fans, coolers and air extractors.
2. Ionizer.
3. Energy supply system.
4. Any other element depending on the location and characteristics required for the correct operation of the 3D Multifunctional System under different atmospheric and climatic conditions.

The operation of all these elements is also controlled by the computer (hardware and software) already described through the relevant interfaces.

The invention has been described sufficiently so that a person with knowledge of the matter can reproduce and obtain the results mentioned in the present invention. However, any person skilled in the background art that concerns the present invention could be able to make modifications not described in the present application. Any such modifications (to an individual structure or factory processes) that rely on the technological base of this invention will be subject to the claims mentioned herein.

Having described the invention in sufficient detail, it is considered as novelty and therefore it is claimed as property what is expressed and content in the following disclosures.

## Claims

1. 3-D image projection system **characterized by** the Electronic and Software Elements **C** (built by a projection screen, among other elements, that constitutes the luminous source to project two-dimensional images), combined with the 3D Optical Subsystem ***A*** built by a stereoscopic screen, so that images can be viewed in daylight, with an immersion effect, suspended in the air, as real volumes in third dimension and without a visual aid. The stereoscopic screen is transparent, with certain physical properties and may has certain inclination and bend (conical, circular, elliptical or equivalent forms), according to the geometric optical variations required.

2. 3-D image projection system, as it is claimed in the previous disclosure, also **characterized by** the Electronic and Software Elements ***C*** variations used to reproduce two-dimensional images that are selected from any possible combination among projection systems (computer, television set, VCR, slides, tapes or film projectors, among others) and media storage systems (optical, electromagnetic or any other technology regardless of the physical and logical format used).

3. 3-D image projection system, as it is claimed in disclosures 1 and 2, also **characterized by** the optional Optical Geometric Variations ***B*** which can also be combined with the Electronic and Software Elements ***C*** and the 3D Optical Subsystem ***A*** for allowing the use of optical geometric variations, including additional optical lenses, mirrors or secondary screens between the projection screen and the stereoscopic screen, for different applications and requirements.

4. 3-D image projection system, as claimed in disclosures 1 to 3, also **characterized by** the Electronic and Software Elements ***C*** to built an Operation and Projection Schedule and a 3D Video-Library to control and project continuously different 3D messages in a period of time, turn on and off the 3D System and report the operation status.

5. 3-D image projection system, as claimed in disclosures 1 to 4, also **characterized by** the Electronic and Software Elements ***E*** that allows the 3D Multifunctional System to be controlled from a Central Unit through an Operation and Projection Schedule and a 3D Video-Library.

6. 3-D image projection system, as claimed in disclosures 1 to 5, also **characterized by** the Electronic and Software Elements ***E*** that control, administrate, supervise and operate the system from a Central Unit through a telecommunications solution.

7. 3-D image projection system, as claimed in disclosures 1 to 6, also **characterized by** the Electronic and Software Elements ***F*** that control, administrate, supervise and operate the system in situ.

8. 3-D image projection system, as claimed in disclosures 1 to 7, also **characterized by** the Electronic and Software Elements ***D*** to enhance the global effect of 3D images projection, such as back plane screens, video or camera recorders or interactive functions based on presence sensors, among many others.

9. 3-D image projection system, as claimed in disclosures 1 to 8, also **characterized by** being able to include one or several of the additional ***G*** functional devices, such as a printed information distribution system; queue ticket dispenser; public or private telephones; weighing system; optical reading system; form dispenser with support table and pen; vending machines; automatic ticketing and payment systems; handheld, PDA, computer or other electronic devices that interact to load and download information; any other equivalent solution that may be required in a public or private area where people tend to congregate in groups or individually.

10. 3-D image projection system, as claimed in disclosures 1 to 9, also **characterized by** the ***H*** case that contains all the elements described above in addition to other hardware and software components to set up the operation of the system under different environments and climatic conditions.

11. 3-D image projection system, as claimed in disclosures 1 to 10, also **characterized by** the Electronic and Software Elements ***C*** that are essentially built into a computer (hardware and software) to operate, administrate, maintain and control the 3D System as is claimed in any of the disclosures above, including internal or external media storage and/or specific image projection devices and their interfaces (LCD projectors, TV, DVD, VCR, CD, etc.); the computer operating system; the software to administrate and operate databases and processes; the computer software and hardware elements.
